Europäisches Patentamt

European Patent Office

Office européen des brevets

(19)

(11) Veröffentlichungsnummer: **0 009 514**
**A2**

(12) # EUROPÄISCHE PATENTANMELDUNG

(21) Anmeldenummer: 78200005.3

(22) Anmeldetag: 01.06.78

(51) Int. Cl.³: **G 05 D 23/13**

(43) Veröffentlichungstag der Anmeldung:
16.04.80 Patentblatt 80/8

(84) Benannte Vertragsstaaten:
BE CH DE FR GB NL

(71) Anmelder: Gafner, Ernst
Timmerlistrasse 41
CH-4663 Aarburg(CH)

(72) Erfinder: Gafner, Ernst
Timmerlistrasse 41
CH-4663 Aarburg(CH)

(54) **Mischventil für Warm- und Kaltwasser und zur Verwendung in Druck- als auch in Drucklosanlagen.**

(57) Mischventil für Warm- und Kaltwasser und zur automatischen Regelung einer zum voraus vermittelst einer Handhabe eingestellten Mischwassertemperatur, dadurch gekennzeichnet, dass es aus einem Mischergehäuse mit mindestens zwei Wasseranschlüssen und mit mindestens einem Mischwasserabgang, sowie mit zwei konzentrisch im Gehäuse einander gegenüber eingebauten Reguliereinsätzen besteht, wobei der eine Einsatz die beiden ungleich temperierten Flüssigkeits-ströme vermittelst einer um ihre Drehachse gewundenen und vom Wassergemisch beaufschlagten, wärmeempfindlichen Bimetallwendel einen äusseren beweglichen Drehschieber bei einer Relativverdrehung im entgegengesetzten Sinne zu steuern vermag, der andere Einsatz als Mischwassermengenregler und Abschliessorgan dienend, mit einer Ventildichtung und mit den notwendigen Betätigungsmitteln versehen ist.

./...

EP 0 009 514 A2

- 1 -

Mischventil für Warm- und Kaltwasser und zur Verwendung
in Druck- als auch in Drucklosanlagen.

Die Erfindung betrifft ein Mischventil für Warm- und Kaltwasser und zur automatischen Regelung einer zum voraus eingestellten Mischwassertemperatur.

Es sind Mischventile bekannt, die mit einem relativ träge
funktionierendem Thermoelement ausgerüstet sind, oder
deren Thermoelemente undicht werden können und auf Wasserdruckschwankungen empfindlich sind. Es sind zudem Mischventile bekannt, die enge Steuerkanäle, oder enge Regulierschlitze aufweisen und durch Schmutzteile im Leitungswasser verstopft werden können, und viele Mischventile ererzeugen beim Umstellen von warm auf kalt, oder umgekehrt,
sowie beim Schliessvorgang, unzulässige Drucksteigerungen
(Druckschläge) in den Wasserzufuhrleitungen. Alle bekannten
Mischventile sind mit einem Thermoelement ausgerüstet, das
zur eigentlichen Mischwasserregulierung, zusätzlich noch
reibende O-Ringe, oder Uebersetzungsmechanismen in im
Mischerinnern verkalkten, oder korrodierten Gleit- und
Lagerpartien zu überwinden hat. Die gute Funktion von
Mischventilen wird besonders dadurch beeinträchtigt, wenn
die Reglerfunktionen ausübenden Mischventilinnenteile in
einer Mischventilinnenzone eingebaut sind, dessen Zone von
über 50°C Warmwasser durchflossen wird.

Zudem ist die Mehrzahl aller bekannten Mischventile zur Verhinderung einer möglichen inneren Wasserzirkulation nach dem Mischventilabschluss, zum Beispiel bei ungleichen Druckverhältnissen in den Wasserzufuhrleitungen, mit Rückflussverhinderern (Rückschlagventilen) ausgerüstet. Die unbeschränkte Lebensdauer solcher Rückflussverhinderer ist in der Praxis nicht gegeben. Beim Nichtmehrfunktionieren solcher in Mischventilen ein- oder vorgebauten Rückflussverhinderer, kann Warmwasser aus dem Leitungssystem verdrängt werden und es kann Warmwasser ins Kaltwasserleitungssystem gelangen, wodurch Schäden an Apparaten und Anlageteilen entstehen können. Mischventile, die zur Verhinderung einer möglichen inneren Wasserzirkulation nach dem Mischventilabschluss mit Rückschlagventilen ausgerüstet sind, sind ohne gewisse Einschränkungen, nicht an die Stelle von konventionellen Mischbatterien montierbar.

Der Erfindung liegt die Aufgabe zugrunde, die Funktionssicherheit des Mischventils zu verbessern.

Erfindungsgemäss wird das dadurch erreicht, dass das Drehmoment, das durch die Beaufschlagung des Mischwassers in der wärmeempfindlichen Bimetallwendel erzeugt wird, für keine andere Arbeit, als für die Drehbewegung des äusseren Drehschiebers 9 auf dem stillstehenden Drehschieber 8, und in der Mischwasserzone eingebaut, zu erwirken hat, wobei die beiden Drehschieber 8 und 9, oder zum mindesten deren Laufflächen, aus einem korrosionsbeständigen und Kesselstein abweisenden Werkstoff gefertigt sind, ferner dadurch, dass zur Verhinderung einer inneren Wasserzirkulation in der Schliessstellung, ein mit dem Mengenreguliereinsatz verbundener Regulierkegel 23, eine innere Wasserzirkulation in der Schliessstellung zwangsmässig unterbindet.

Im folgenden wird anhand der beiden Zeichnungen je ein Ausführungsbeispiel der Erfindung näher beschrieben,
es zeigen:

Figur 1 einen Längsschnitt einer Ausführungsform des
Mischventils in Schliesslage.

Figur 2 einen Längsschnitt einer zweiten Ausführungsform des Mischventils in Schliesslage und in der Verwendung nach dem Patentanspruch 2.

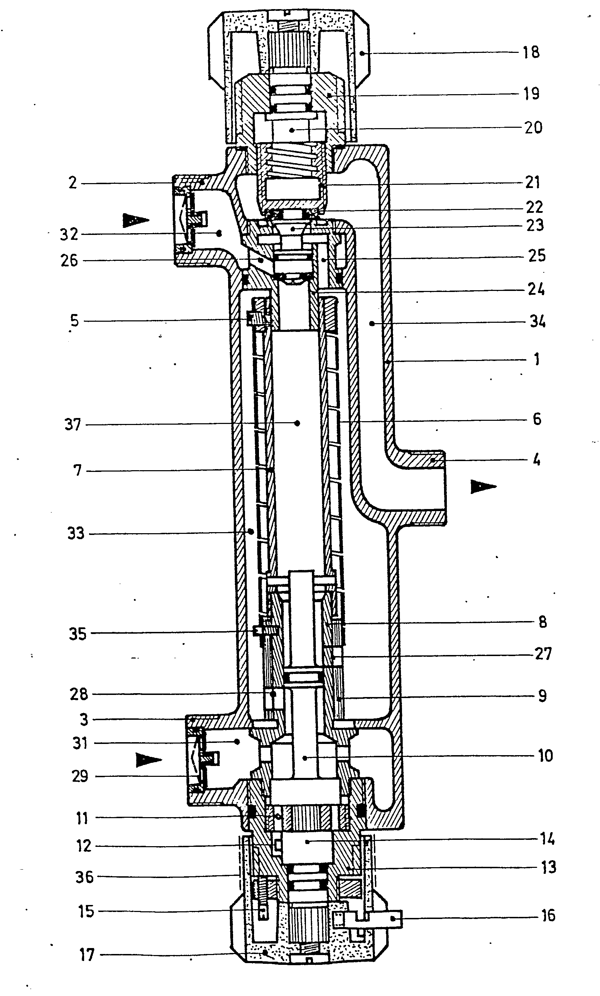

Das in der Figur 1 dargestellte Mischventil weist ein Gehäuse 1, mindestens zwei Wasseranschlüsse 2 und 3, mindestens ein Mischwasserabgang 4, sowie ein kompletter
Reguliereinsatz zum automatischen Regulieren der Mischwassertemperatur, die Teile 5 bis 17, und gegenüber eingebaut, ein kompletter Reguliereinsatz zum Regulieren der
Mischwassermenge und zum Abschliessen, die Teile 18 bis 24
auf.

Das Mischventilgehäuse 1 kann gegossen, warmgepresst, oder
aus Stangenmaterial gefertigt sein. Der Warmwasseranschluss
an das Mischventil kann, je nach dem Drehsinn der Bimetallwendel 6, sowohl am Anschluss 2, als auch am Anschluss 3,
mit Vorteil jedoch am Anschluss 3 erfolgen. Der Mischwasserabgang 4 kann auch an einer anderen Stelle des Mischventils angebracht sein. Am Mischwasserabgang 4 kann ein
Auslaufteil, zum Beispiel, ein Brauseschlauch, ein Schwenkauslauf, ein Umstellventil, usf. fest oder lösbar verbunden
sein. Nach dem Lösen, beziehungsweise Entfernen der Reguliergriffe 17 und 18, können die im Gehäuse 1 einander
gegenüber eingebauten Reguliereinsätze mit Normalwerkzeug
ausgebaut und eingebaut werden. Die Ventildichtung 22, als
häufigster Verschleissteil eines Mischventils, kann auf bekannte Art von jedem Fachmann ersetzt werden. Die Ventildichtung 22 schliesst gegen den Mischwasserstrom, sie wird
vom Warmwasser praktisch nicht beaufschlagt, sie hat daher
eine lange Lebensdauer.

Das nach der Figur 1 in Schliesslage gezeichnete Mischventil funktioniert wie folgt:

Durch Drehen am Reguliergriff 18 wird die Ventildichtung 22 vom Ventilsitz 24 abgehoben, also das Mischventil geöffnet. Je nach der Temperatureinstellung, fliesst nun zuerst Warmwasser vom Anschluss 3 durch die Kammer 31 und durch mindestens drei Radialöffnungen 28 im inneren und äusseren Drehschieber 8 und 9, in die Mischkammer 33. Beim Durchfluss des Warmwassers durch die Mischkammer 33, wird die wärmeempfindliche Bimetallwendel 6 innert kurzer Zeit und in ihrer ganzen Ausdehnung beaufschlagt, wodurch die Bimetallwendel 6 ein Drehmoment erzeugt. Da das eine Bimetallwendelende vermittelst einer Schraube 5 mit dem Drehrohr 7 und dem Reguliergriff 17 verbunden und fixiert ist, führt das andere Bimetallwendelende eine Drehbewegung durch, die vermittelst der Schraube 35 auf den äusseren beweglichen Drehschieber 9 übertragen wird. Diese relative Verdrehung des äusseren Drehschiebers 9 auf dem inneren festen Drehschieber 8, erwirkt, dass die Radialöffnungen 28 in den beiden Drehschiebern 8 und 9 nicht mehr voll übereinstimmen und demzufolge der Warmwasserdurchfluss durch diese Oeffnungen 28 gedrosselt wird. Diese relative Drehung des äusseren beweglichen Drehschiebers 9 erwirkt anderseits, dass sich die weiteren radialen Oeffnungen 27 im äusseren und inneren Drehschieber 8 und 9 mehr und mehr überdecken und also Kaltwasser vom Anschluss 2 kommend und durch die Kammer 32, eine Anzahl Oeffnungen 26, die Kammer 37 und durch die Oeffnungen 27, zu fliessen beginnt. In der Mischkammer 33 entsteht dabei automatisch ein Wassergemisch der beiden, dem Mischventil ungleich temperiert zufliessenden Wasserströme. Das Mischwasser fliesst endlich aus der Mischkammer 33 durch Oeffnungen 25 im Ventilsitz 24, an der Ventildichtung 22 vorbei in die Kammer 34 und über den Mischwasserabgang 4 zu der Wasserentnahmestelle.

Am Temperaturreguliergriff 17 befindet sich eine Temperaturskala 36, die mit einem am Gehäuse 1 vorhandenem Fixpunkt zur Uebereinstimmung gebracht werden kann. Der Temperaturreguliergriff 17 ist über die Spindel 14, eine Untersetzung 11, den Zentralbolzen 10, dem Zentralrohr 7 und der Schraube 5, drehbar mit dem einten Ende der Bimetallwendel 6 verbunden. Die Untersetzung 11, die zur guten Funktion des Mischventils nicht unbedingt erforderlich ist, dient lediglich dazu, die Temperaturskala 36 auf dem Reguliergriff 17 und zur besseren Lesbarkeit der Skala, strecken zu können.

Der Regulierkegel 23 kann erfindungsgemäss gleichzeitig als Ventilkolben ausgebildet sein. Er verhindert in der Schliessstellung des Mischventils automatisch eine innere Wasserzirkulation, also den Wasserdurchfluss von den Oeffnungen 26 in die Kammer 37, oder umgekehrt. Das Mischventil kann man dadurch, ohne Installationseinschränkungen, an die Stelle jeder konventionellen Mischarmatur montieren.

Die in den Anschlüssen 2 und 3 gezeichneten Rückschlagventile dienen nicht zur fraglichen Verhinderung einer möglichen inneren Wasserzirkulation, sondern zur Verhütung des Rücksaugens von Schmutzwasser, zum Beispiel aus einer Badewanne in das Wasserleitungsnetz. Die Anschlüsse 2 und 3 müssen nicht unbedingt mit Wasserfiltern bestückt werden, da im Mischventilinnern enge Bohrungen, oder kleine Regulierschlitze, die verschmutzen könnten, fehlen.

Aus den Zeichnungen ist zu ersehen, dass die beiden einzigen, die Mischwasserregulierung bewirkenden Drehschieber 8 und 9 vollkommen in der Mischwasserzone der Kammer 33 eingebaut sind. In dieser, dauernd unter Innendruck stehenden Mischkammer 33, bildet sich erfahrungsgemäss kein Kalkniederschlag, womit die gute Funktion des Mischventils für eine lange Dauer gewährleistet ist. Die Bimetallwendel 6 wird beim Wasserdurchfluss zwangsweise und in ihrer ganzen Länge vom Mischwasser beaufschlagt, wodurch eine sekundenschnelle richtige Regulierung der gewünschten Mischwassertemperatur erzielt wird. Beim plötzlichen Ausfall der Warm- oder Kaltwasserzufuhr, schliesst das Mischventil in rund einer Sekunde bis auf einen geringen Spaltverlust. Verbrühungen und Schockwirkungen beim Duschen sind bei der Verwendung des Mischers nicht gegeben.

Die Reguliergriffe 17 und, oder 18, können auch als Hebelgriffe ausgebildet sein. Anstelle der Reguliergriffe können die Reguliereinsätze auch mit einer Kappe verschlossen sein. Der Einsatz zum Mengenregulieren und Abschliessen kann auch als Elektroventil, Pneumatikventil, Hydraulikventil, oder als Ventil mit einer Schliessverzögerung ausgebildet sein. Der Ventilsitz 24 ist auswechselbar mit dem Gehäuse 1 verschraubt. Ein Anschlag 12 dient zur Drehbegrenzung des Temperaturreguliergriffes 17. Mit einem weiteren Anschlag 15 kann die obere Mischwassertemperatur begrenzt werden. Mit einer Entblockierung, in der Zeichnung beispielsweise mit einem Druckknopf 16 dargestellt, kann die obere Mischwassertemperaturbegrenzung entblockiert werden, die Mischwassertemperatur also zusätzlich um einige Temperaturgrade höher einreguliert werden. Die Drehschieber 8 und 9, oder mindestens deren Laufflächen, sind aus korrosionsbeständigem und Kesselstein abweisenden Werkstoff. Die Bimetallwendel 6 ist aus mindestens zwei Metallkomponenten und rostfrei.

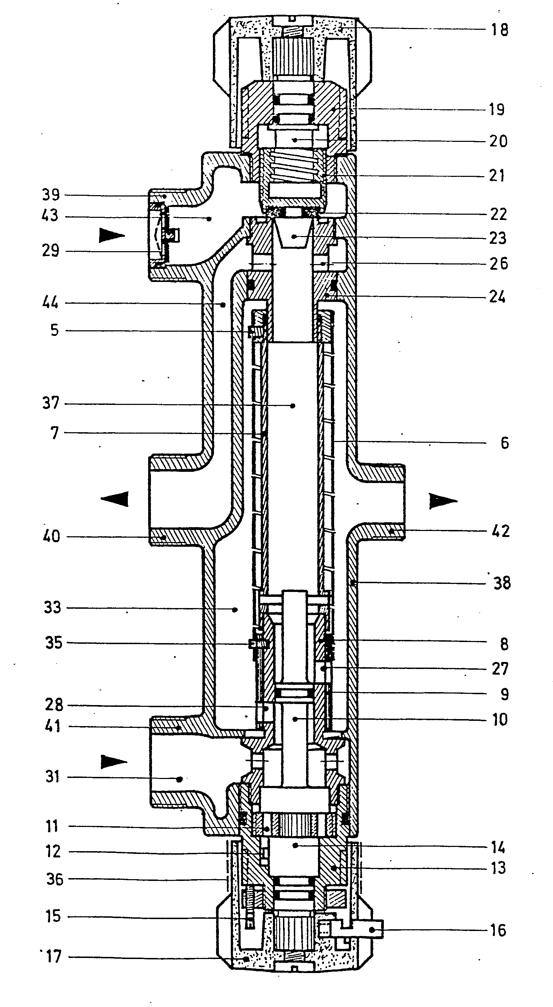

Das in der Figur 2 dargestellte Mischventil nach Patentanspruch 2 und zur Verwendung mit einem Niederdruckwarmwasserbereiter, weist ein Gehäuse 38, einen Kaltwasseranschluss vom Netz 39, einen Kaltwasserabgang 40 zum Niederdruckwarmwasserbereiter, einen Warmwasseranschluss 41 vom Niederdruckwarmwasserbereiter, einen Mischwasserabgang 42, sowie ein kompletter Reguliereinsatz bestehend aus den Teilen 5 bis 17 zum Regulieren der Mischwassertemperatur und ein kompletter Reguliereinsatz zum Regulieren der Mischwasserauslaufmenge, die Teile 18 bis 24 auf.

Das in der Figur 2 dargestellte Mischventil funktioniert wie folgt:

Durch Drehen am Reguliergriff 18 wird die Ventildichtung 22 vom Ventilsitz 24 abgehoben und der Kaltwasserdurchfluss vom Anschluss 39 über die Kammer 43 und unter der Ventildichtung 22, einerseits über Oeffnungen 26 in die Kammer 44 und anderseits in die Kammer 37 ermöglicht. Je nach der Mischwassertemperatureinstellung am Reguliergriff 17, fliesst nun zuerst das kalte Wasser aus der Kammer 44 und den Wasseranschluss 40 zum Niederdruckwarmwasserbereiter. Gleichzeitig fliesst das im Niederdruckwarmwasserbereiter erwärmte Wasser über den Anschluss 41 in das Mischventil. Beim Durchfluss des Warmwassers durch die Kammer 31 und durch mindestens drei radiale Oeffnungen 28 im inneren und äusseren Drehschieber 8 und 9, in die Mischkammer 33, wird die in der Mischkammer 33 befindliche Bimetallwendel 6 vom Warmwasser beaufschlagt, wodurch innert kurzer Zeit ein Drehmoment erzeugt wird. Da das eine Bimetallwendelende vermittelst einer Schraube 5 mit dem Temperaturreguliergriff 17 verbunden und fixiert ist, führt das andere Bimetallwendelende eine Drehbewegung durch, die vermittelst der Schraube 35 auf den äusseren beweglichen Regulierdrehschieber 9 übertragen wird. Diese relative Verdrehung des äusseren Drehschiebers 9 auf dem inneren festen Drehschieber 8, erwirkt, dass die radialen Oeffnungen 28 in den beiden Drehschiebern 8 und 9 nicht mehr voll übereinstimmen und demzufolge der Warmwasserdurchfluss durch die Oeffnungen 28 gedrosselt wird. Diese relative Drehung des äusseren beweglichen Drehschiebers 9 erwirkt anderseits, dass sich die radialen Oeffnungen 27 im inneren und äusseren Drehschieber 8 und 9 mehr und mehr überdecken und also Kaltwasser von der Kammer 37 und die Oeffnungen 27, zu fliessen beginnt. Das dabei in der Mischkammer 33 erzeugte Wassergemisch der beiden dem Mischventil zufliessenden, ungleich temperierten Wasserströme, gelangt endlich über den Abgang 42 zur Wasserentnahmestelle. Der Regulierkegel 23 dient in dieser Ausführungsform lediglich zur Drosselung der Kaltwasserzufuhr. Die Verwendung des Mischventils nach der Figur 2 und dem Patentanspruch 2 erbringt Preisvorteile.

- 1 -                                    0009514

Patentansprüche:

1. Mischventil für Warm- und Kaltwasser und zur automatischen Regelung einer zum voraus manuell eingestellten Mischwassertemperatur,
dadurch gekennzeichnet, dass es aus einem Gehäuse mit mindestens zwei Wasseranschlüssen und mit mindestens einem Mischwasserabgang, sowie mit zwei kompakten, im Gehäuse einander gegenüber konzentrisch eingebauten Reguliereinsätzen besteht, wobei der eine Reguliereinsatz die beiden Flüssigkeitsströme vermittelst einer um ihre Drehachse gewundenen und vom Wassergemisch beaufschlagten, wärmeempfindlichen Bimetallwendel einen äusseren beweglichen Drehschieber auf einem inneren festen Drehschieber bei einer Relativverdrehung im entgegengesetzten Sinne zu steuern vermag, der andere Reguliereinsatz als Mischwassermengenregler und Abschliessorgan dienend, mit einer Ventildichtung und mit den notwendigen Betätigungsmitteln versehen ist.

2. Verwendung des Mischventils nach Patentanspruch 1, in Verbindung mit einem Niederdruckwarmwasserbereiter,
dadurch gekennzeichnet,
dass am Mischventilgehäuse ein Kaltwassereingang vom Netz, ein Kaltwasserabgang zum Warmwasserbereiter, ein Warmwasseranschluss vom Warmwasserbereiter und mindestens ein Mischwasserabgang vorhanden sind.

3. Mischventil nach Patentanspruch 1 oder 2,
dadurch gekennzeichnet, dass zwischen dem Reguliergriff 17 für die Temperaturregulierung und der Bimetallwendel 6 eine Untersetzung 11 zwischengeschaltet ist.

4. Mischventil nach Patentanspruch 1 oder 2, sowie Anspruch 3, dadurch gekennzeichnet, Patentansprüche:

dass der Mischwasserabgang fest, oder lösbar, mit einem Auslaufteil verbunden ist.

5. Mischventil nach Patentanspruch 1 oder 2, sowie 3 und 4, dadurch gekennzeichnet, dass der Temperaturreguliereinsatz mit einer entblockierbaren Mischwassertemperaturbegrenzung versehen ist.

6. Mischventil nach den Patentansprüchen 1, sowie 3 bis 5, dadurch gekennzeichnet, dass an der Ventilglocke des Mengenreguliereinsatzes ein Ventilkegel befestigt ist, der in der Schliessstellung des Mischventils gleichzeitig eine innere Verbindung zwischen der Warm- und Kaltwasserzufuhr zwangsmässig unterbindet.

7. Mischventil nach Patentanspruch 1, sowie den Ansprüchen 3 bis 6, dadurch gekennzeichnet, dass in den Mischventilwasseranschlüssen, je ein Rückflussverhinderer eingebaut ist.

8. Mischventil nach Patentanspruch 1 oder 2, sowie den Ansprüchen 3 bis 7, dadurch gekennzeichnet, dass die eigentlichen, die Temperaturregulierung ausübenden Innenteile, in der Mischwasserzone des Mischventils eingebaut sind.

0009514

1/2

0009514